# EUROPEAN PATENT APPLICATION

(11) **EP 4 814 370 A1**
(43) Date of publication of application: **30.09.2026**
(21) Application number: 24894003.3
(22) Date of filing: 07.11.2024
(51) Int. Cl.: F21V 5/00, F21S 2/00, G02B 3/08, F21W 131/20, F21Y 115/30

(54) **META-LENS, METHOD FOR MANUFACTURING SAME, AND LIGHTING DEVICE**

(30) Priority: 22.11.2023 JP 2023198669
(71) Applicant: Tamron Co., Ltd., Saitama-shi Saitama 337-8556 (JP); National University Corporation Tokyo University Of Agriculture and Technology, Fuchu-shi Tokyo 183-8538 (JP)
(72) Inventor: LI, Jie, Saitama-shi, Saitama 337-8556 (JP); IWAMI, Kentaro, Fuchu-shi, Tokyo 183-8538 (JP); IKEZAWA, Satoshi, Fuchu-shi, Tokyo 183-8538 (JP)
(74) Representative: MFG Patentanwälte Meyer-Wildhagen Meggle-Freund Gerhard PartG mbB
(86) International application number: PCT/JP2024/039530
(87) International publication number: WO 2025/110011

(57) **Abstract**

There is provided a meta-lens capable of converting a beam profile from a Gaussian distribution to a top-hat distribution by a nanostructure on only one major surface of a substrate. The meta-lens (1) is configured by arranging a plurality of nano-sized pillars (3) on one major surface of a substrate (2) having light transmissivity. The pillars (3) positioned inward of a distance r from an optical center are typically arranged such that changes in their cross-sections are represented by a function satisfying specified three conditions.

## Description

### Technical Field

The present invention relates to a meta-lens, a manufacturing method of the meta-lens, and an illumination device.

### Background Art

In illumination for pathological diagnosis and the like, it is generally required that an illumination range is wide and that an intensity distribution is high and uniform. In addition, a laser or a light-emitting diode is used as a light source for such illumination. Emitted light from such a light source is typically a Gaussian beam having a radiant intensity of a Gaussian distribution. Therefore, in the above illumination, it is required to convert a beam profile of the emitted light from the light source from a Gaussian distribution to a top-hat profile having a substantially uniform distribution of a radiant intensity.

Conversion of a beam profile from a Gaussian distribution to a top-hat profile can be realized by an optical system including an aspherical lens. However, in an illumination device for a small-sized device such as an endoscope, a smaller optical system for converting the above beam profile is required.

As a technique for converting a beam profile with such a small-sized optical system, there is known a technique of arranging, in an optical path of emitted light from a light source, a double-sided meta-lens having pillars on both a major surface on an incident side and a major surface on an emission side. In this technique, the emitted light from the light source is collimated by a nanostructure on the incident side, and a radiation angle of the emitted light is controlled by a nanostructure on the emission side (for example, refer to Patent Literature 1).

### Citation List

### Patent Literature

Patent Literature 1: U.S. Patent Application Publication No. 2023/0258316

### Summary of the Invention

### Problems to be Solved by the Invention

However, in such a technique in the related art as described above, it is necessary to form nanostructures having different functions on the respective major surfaces of a substrate in order to control the emitted light. From a viewpoint of controlling a beam profile by forming a nanostructure on only one major surface of the substrate, there remains room for further study.

An aspect of the present invention aims to provide a meta-lens capable of converting a beam profile from a Gaussian distribution to a top-hat distribution by a nanostructure on only one major surface of a substrate.

### Solutions to Problems

In order to solve the above problem, a meta-lens according to an aspect of the present invention includes a substrate having light transmissivity, and a plurality of nano-sized pillars having light transmissivity arranged on one major surface of the substrate, in which, when an optical center of the meta-lens is set as an origin, an area S of each of pillars positioned at points having a distance r from the optical center is represented by a function S(r) that satisfies the following three conditions.
(1) The function is continuous in a range of -r0 ≤ r ≤ r0 (r0 > 0).
(2) The function takes a minimum value at r = 0.
(3) The function takes a maximum value at r = ±r1 (0 < r1 < r0).

Alternatively, in order to solve the above problem, a meta-lens according to an aspect of the present invention includes a substrate having light transmissivity, and a plurality of nano-sized pillars having light transmissivity arranged on one major surface of the substrate, in which, when an optical center of the meta-lens is set as an origin, an area occupancy ratio Σ of the pillars positioned at points having a distance r from the optical center is represented by a function Σ(r) that satisfies the following three conditions.
(1) The function is continuous in a range of -r0 ≤ r ≤ +r0 (r0 > 0).
(2) The function takes a minimum value at r = 0.
(3) The function takes a maximum value at r = ±r1 (0 < r1 < r0).

In addition, in order to solve the above problem, an illumination device according to an aspect of the present invention includes a light source that emits a Gaussian beam and the above-described meta-lens arranged on an optical path of emitted light from the light source.

In addition, in order to solve the above problem, a manufacturing method of a meta-lens according to an aspect of the present invention includes arranging pillars having light transmissivity on one major surface of a substrate having light transmissivity such that a phase distribution of light transmitted through the meta-lens becomes a phase distribution obtained by adding a first phase distribution of a lens that converts a specific Gaussian beam into collimated light and a second phase distribution of a metasurface that converts a beam profile of the collimated light of the specific Gaussian beam into a top-hat shape.

### Effects of the Invention

According to an aspect of the present invention, it is possible to provide a meta-lens capable of converting a beam profile from a Gaussian distribution to a top-hat distribution by a nanostructure on only one major surface of a substrate.

### Brief Description of Drawings

Fig. 1 is a diagram schematically illustrating a configuration of a meta-lens according to one embodiment of the present invention.
Fig. 2 is a diagram for describing an arrangement of pillars in the meta-lens according to one embodiment of the present invention.
Fig. 3 is a diagram illustrating an example of a distribution of widths of pillars in the meta-lens according to one embodiment of the present invention.
Fig. 4 is a diagram illustrating an example of a distribution of cross-sectional areas of pillars in the meta-lens according to one embodiment of the present invention.
Fig. 5 is a diagram illustrating an example of a distribution of an area occupancy ratio of pillars in the meta-lens according to one embodiment of the present invention.
Fig. 6 is a diagram illustrating an example of a radiant intensity distribution of laser light incident on the meta-lens according to one embodiment of the present invention.
Fig. 7 is a diagram for describing a beam shape related to a meta-lens according to one embodiment of the present invention.
Fig. 8 is a diagram illustrating an example of a continuous phase distribution (unwrapped phase distribution) and a phase distribution folded within a range of 0 to 2π (wrapped phase distribution) obtained by (1) a spherical lens (SL) for collimated light, (2) a Gaussian-to-top-hat conversion metasurface (GTBS), and (3) a combination thereof (GTBS+SL), when a numerical aperture NA at a light source is 0.22 and a top-hat beam divergence angle θ is 5°.
Fig. 9 is a diagram illustrating an example of a relationship between a distance from an optical center of a meta-lens and a width of a pillar, when square-prism pillars having the same height are arranged in accordance with (1) the wrapped phase distribution of SL, (2) the wrapped phase distribution of GTBS, and (3) the wrapped phase distribution of GTBS+SL in Fig. 8.
Fig. 10 is a diagram illustrating an example of a relationship between a distance from an optical center of a meta-lens and a cross-sectional area of a pillar, when square-prism pillars having the same height are arranged in accordance with the wrapped phase distributions of (1) to (3) in Fig. 8.
Fig. 11 is a diagram illustrating an example of a relationship between a distance from an optical center of a meta-lens and an area occupancy ratio of a pillar, when square-prism pillars having the same height are arranged in accordance with the wrapped phase distributions of (1) to (3) in Fig. 8.
Fig. 12 is a diagram illustrating an example of a relationship between a distance from an optical center of a meta-lens and a radius of a pillar, when cylindrical pillars having the same height are arranged in accordance with the wrapped phase distributions of (1) to (3) in Fig. 8.
Fig. 13 is a diagram illustrating an example of a relationship between a distance from an optical center of a meta-lens and a cross-sectional area of a pillar, when cylindrical pillars having the same height are arranged in accordance with the wrapped phase distributions of (1) to (3) in Fig. 8.
Fig. 14 is a diagram illustrating an example of a relationship between a distance from an optical center of a meta-lens and an area occupancy ratio of a pillar, when cylindrical pillars having the same height are arranged in accordance with the wrapped phase distributions of (1) to (3) in Fig. 8.
Fig. 15 is a diagram illustrating an example of an unwrapped phase distribution and a wrapped phase distribution of GTBS+SL when NA is 0.1, 0.2, or 0.3 and θ is 5°.
Fig. 16 is a diagram illustrating an example of a relationship between a distance from an optical center and a width of a pillar, when square-prism pillars having the same height are arranged in accordance with the wrapped phase distribution in Fig. 15.
Fig. 17 is a diagram illustrating an example of a relationship between a distance from an optical center and an area occupancy ratio of a pillar, when square-prism pillars having the same height are arranged in accordance with the wrapped phase distribution in Fig. 15.
Fig. 18 is a diagram illustrating an example of wrapped phase distributions of SL, GTBS, and GTBS+SL when NA is 0.1 and θ is 15°.
Fig. 19 is a diagram illustrating an example of a wrapped phase distribution of GTBS+SL when NA is 0.1, 0.2, 0.3, or 0.4 and θ is 15°.
Fig. 20 is a diagram schematically illustrating a configuration of an illumination device according to one embodiment of the present invention.
Fig. 21 is a diagram illustrating a measurement result of beam intensity of a meta-lens (GTBS+SL) of a first example.
Fig. 22 is a diagram illustrating a measurement result of beam intensity of a GTBS metasurface of a first comparative example.
Fig. 23 is a diagram illustrating a relationship between a distance from an optical center and an area occupancy ratio of a pillar in a meta-lens of a second example.
Fig. 24 is a diagram illustrating a distribution of beam intensity of the meta-lens of the second example in an x-z plane.
Fig. 25 is a diagram illustrating a distribution of beam intensity of the meta-lens of the second example at a specific transmission distance.
Fig. 26 is a diagram illustrating a relationship between a distance from an optical center and an area occupancy ratio of a pillar in a GTBS metasurface of a second comparative example.
Fig. 27 is a diagram illustrating a distribution of beam intensity of the meta-lens of the second comparative example in an x-z plane.
Fig. 28 is a diagram illustrating a distribution of beam intensity of the meta-lens of the second comparative example at a specific transmission distance.
Fig. 29 is a diagram illustrating a relationship between a distance from an optical center and an area occupancy ratio of a pillar in a meta-lens of a third example.
Fig. 30 is a diagram illustrating a distribution of beam intensity of the meta-lens of the third example in an x-z plane.
Fig. 31 is a diagram illustrating a distribution of beam intensity of the meta-lens of the third example at a specific transmission distance.
Fig. 32 is a diagram illustrating a relationship between a distance from an optical center and an area occupancy ratio of a pillar in a GTBS metasurface of a third comparative example.
Fig. 33 is a diagram illustrating a distribution of beam intensity of the meta-lens of the third comparative example in an x-z plane.
Fig. 34 is a diagram illustrating a distribution of beam intensity of the meta-lens of the third comparative example at a specific transmission distance.

### Description of Embodiments

### [Meta-Lens]

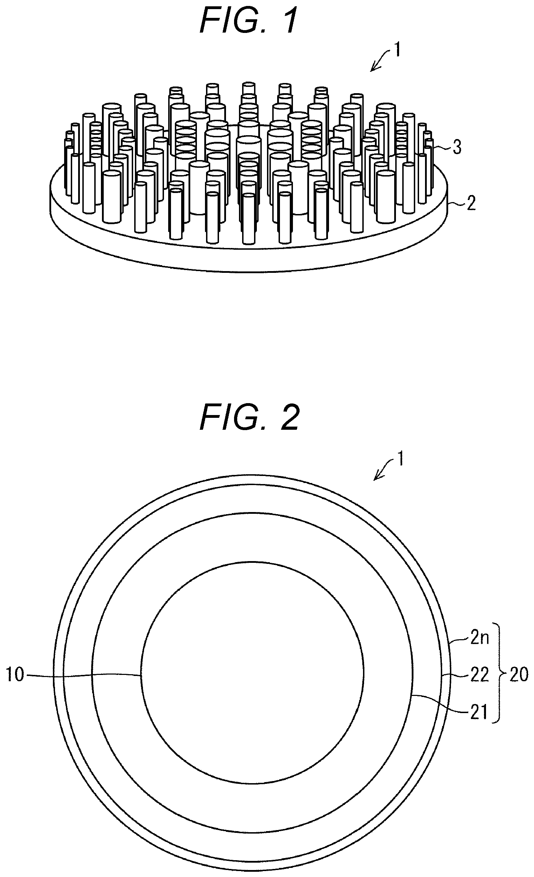

Hereinafter, one embodiment of the present invention will be described. Fig. 1 is a diagram schematically illustrating a configuration of a meta-lens according to one embodiment of the present invention. Fig. 2 is a diagram for describing an arrangement of pillars in the meta-lens according to one embodiment of the present invention. As illustrated in Fig. 1, a meta-lens 1 includes a substrate 2 having light transmissivity, and a plurality of nano-sized pillars 3 having light transmissivity. The substrate 2 is, for example, a circular flat plate in a plan view.

The pillars 3 are arranged over an entirety of one major surface of the substrate 2. In the present embodiment, the one major surface of the substrate 2 is microscopically divided into lattice-shaped unit sections, and one pillar 3 is arranged in each unit section. Each pillar 3 is arranged in an appropriate form in each unit section in accordance with a position of the unit section on the major surface and optical characteristics required for the meta-lens 1.

In addition, as illustrated in Fig. 2, the one major surface of the substrate 2 is, macroscopically, divided into a circular central portion 10 and an annular peripheral portion 20 surrounding the central portion 10, separately from the unit sections described above. In the present embodiment, the peripheral portion 20 is divided, from an inner side, into a first peripheral portion 21, a second peripheral portion 22,..., and an n-th peripheral portion 2n. Here, n represents an order of the peripheral portions when the annular peripheral portion is counted from the central portion 10, and is a positive integer equal to or greater than 1. As a diameter of the meta-lens increases, n generally increases. For example, when the diameter of the meta-lens is 50 µm, n may be 3. In this case, as illustrated in Fig. 2, the peripheral portion is illustrated as three concentric annular regions.

In the present embodiment, when an optical center of the meta-lens (for example, a center of the central portion 10) is set as an origin, an area S of each of the pillars 3 positioned at points having a distance r from the optical center can be represented by a function S(r) that satisfies the following three conditions. Alternatively, in the present embodiment, an area occupancy ratio Σ of the pillars 3 positioned at points having a distance r from the optical center can be represented by a function Σ(r) that satisfies the following three conditions. Alternatively, in the present embodiment, a width W of each pillar 3 at a point positioned at a distance r from the optical center can be represented by a function W(r) that satisfies the following three conditions.
(1) The function is continuous in a range of -r0 ≤ r ≤ r0 (r0 > 0).
(2) The function takes a minimum value at r = 0.
(3) The function takes a maximum value at r = ±r1 (0 < r1 < r0).

The "area of a pillar" may be any representative value indicating a size of a region occupied by the pillar on the major surface of the substrate. For example, the area of a pillar may be an area obtained by projecting the pillar onto the major surface along an optical axis. In this case, in a case where the pillar has a straight-sided shape, the area of the pillar may be a bottom area of the pillar or a cross-sectional area of the pillar. In the following description, embodiments of the present invention will be described by taking, as an example, a case in which the shape of the pillar is a square prism or a cylinder, and the area of the pillar will be described as a cross-sectional area of the pillar.

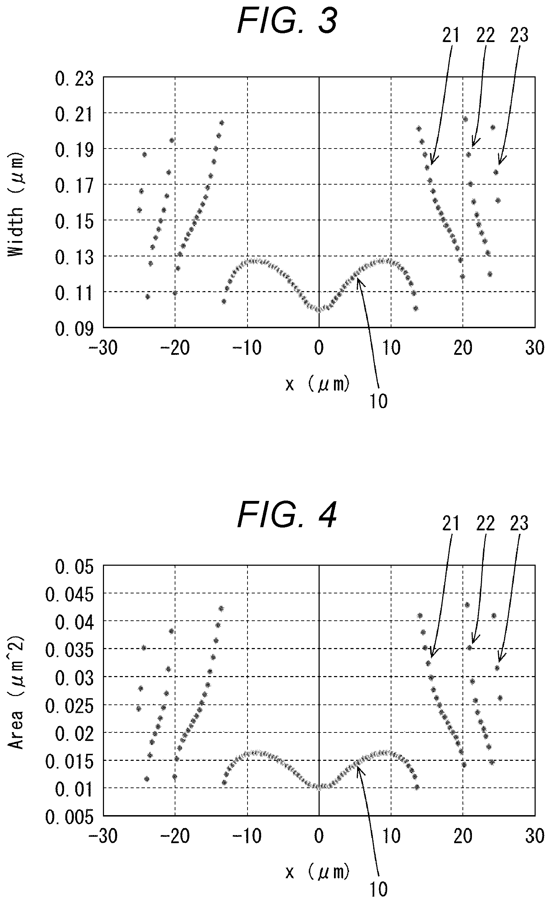

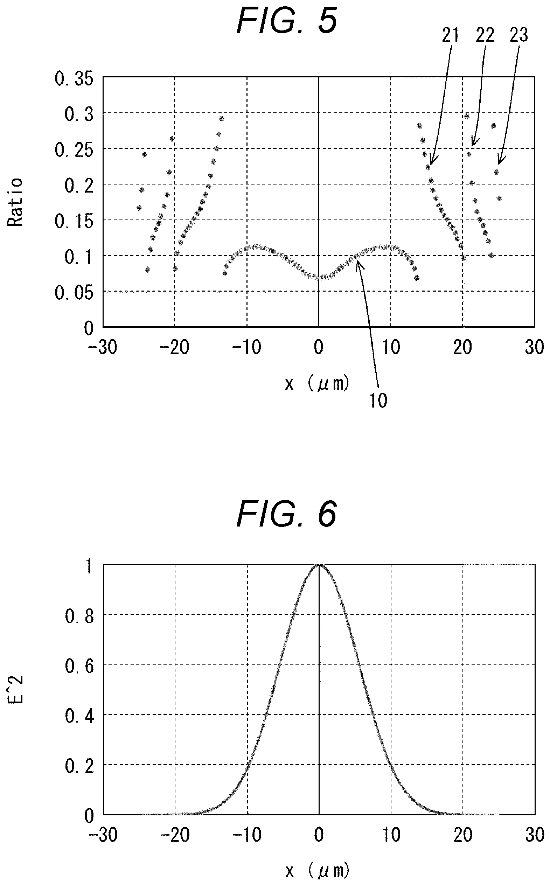

Fig. 3 is a diagram illustrating an example of a distribution of widths of pillars in the meta-lens according to the present embodiment, Fig. 4 is a diagram illustrating an example of a distribution of cross-sectional areas of pillars in the meta-lens according to the present embodiment, and Fig. 5 is a diagram illustrating an example of a distribution of an area occupancy ratio of pillars in the meta-lens according to the present embodiment. Figs. 3 to 5 illustrate an example of a meta-lens in which n in Fig. 2 is 3. In the meta-lens 1 of the present embodiment, a center-to-center distance between adjacent pillars 3 is constant, and the height of the pillars 3 is also constant. In addition, in the present specification, an "area occupancy ratio of a pillar" means a ratio Sp/Su of a cross-sectional area Sp of a pillar to an area Su of a unit section of the substrate.

Fig. 3 illustrates a phase distribution folded (wrapped) within a range of 0 to 2π (also referred to as a "wrapped phase distribution"). In the folded phase distribution, discontinuous steps of 2π occur. A first peripheral portion 21 to a third peripheral portion 23 correspond to phase wrapping. As illustrated in Fig. 3, the width of the pillars continuously changes so as to take a minimum value at the optical center in the central portion 10 and to take a maximum value outside the central portion 10. From the central portion 10 to the first peripheral portion 21, from the first peripheral portion 21 to the second peripheral portion 22, and from the second peripheral portion 22 to the third peripheral portion 23, the width of the pillars changes so as to increase discontinuously. In each of the first peripheral portion 21, the second peripheral portion 22, and the third peripheral portion 23, the width of the pillars continuously changes so as to gradually decrease from an inner side toward an outer side.

As illustrated in Fig. 4, a distribution of cross-sectional areas of the pillars in the meta-lens changes in the same manner as the distribution of the widths of the pillars described above with reference to Fig. 3. In addition, as illustrated in Fig. 5, a distribution of an area occupancy ratio of the pillars in the meta-lens also changes in the same manner as the distribution of the widths of the pillars described above with reference to Fig. 3.

The meta-lens of the present embodiment, by virtue of the above-described characteristics of the arrangement (distribution) of the pillars, is capable of emitting incident light having a Gaussian beam profile as light having a substantially top-hat beam profile. This point will be described in more detail in examples described later. Hereinafter, a manufacturing method of the meta-lens of the present embodiment will be described.

### [Manufacturing Method of Meta-lens]

The meta-lens of the present embodiment can be manufactured by arranging pillars having light transmissivity on one major surface of a substrate having light transmissivity such that a phase distribution of light transmitted through the meta-lens becomes a phase distribution obtained by adding a predetermined first phase distribution and a second phase distribution.

Hereinafter, incident light set in designing the meta-lens will be described. Fig. 6 is a diagram illustrating an example of a radiant intensity distribution of laser light incident on the meta-lens according to the present embodiment. As illustrated in Fig. 6, the laser light is a Gaussian beam and has a radiant intensity distribution of a Gaussian distribution.

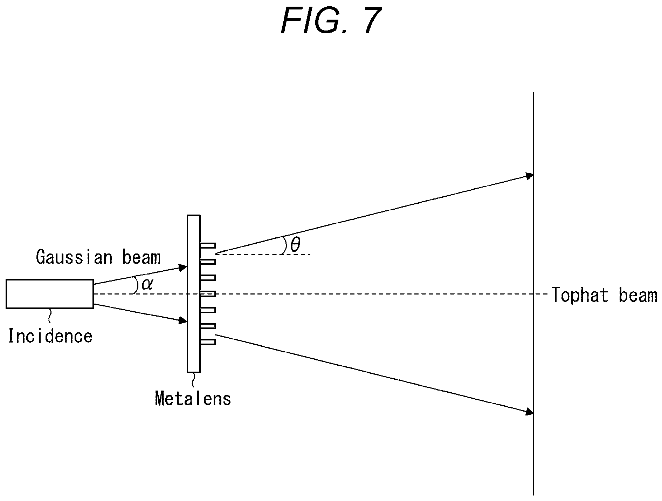

Fig. 7 is a diagram for describing a beam shape related to the meta-lens according to the present embodiment. Laser light emitted from a laser serving as a light source has a divergence angle α, as illustrated in Fig. 7. The divergence angle α is expressed as "n × sinα", where a numerical aperture of the light source (a laser or an optical element such as a lens or an optical fiber associated with a light-emitting device) is NA, and a refractive index of a medium of the optical element associated with the light-emitting device is n. In addition, a Gaussian beam that passes through an optical element arranged on an optical path of the laser light for converting a beam profile into a top-hat beam profile may have a top-hat beam divergence angle θ different from the divergence angle α described above.

The first phase distribution is a phase distribution of a lens that converts a specific Gaussian beam into collimated light, and is represented, for example, by the following Expression (1). In Expression (1), x represents a distance from an optical axis on an x-axis orthogonal to the optical axis of the lens, y represents a distance from the optical axis on a y-axis orthogonal to both the optical axis and the x-axis, and f represents a focal length of the lens.

[Math 1] $ϕ \left(x, y\right) = 2 π / λ \left(\sqrt{\left({x}^{2}+{y}^{2}+{f}^{2}\right)}-f\right)$

Although Expression (1) represents a phase distribution in a case where the lens is a spherical lens, the first phase distribution is not limited to a phase distribution of a spherical lens. The first phase distribution may be determined depending on conditions of incident light, and any phase distribution of a lens that converts the incident light into collimated light may be employed. For this reason, the first phase distribution may also be a phase distribution of an aspherical lens.

The second phase distribution is a phase distribution of a metasurface that converts a beam profile of collimated light of a specific Gaussian beam into a top-hat shape, and is represented, for example, by the following Expression (2) described in Xin Tan et al., "Diffractive phase elements for beam shaping: a new design method", APPLIED OPTICS, Vol. 34, No. 8, 10 March 1995, p. 1317. In Expression (2), r represents a distance from an optical axis of the metasurface, λ represents a wavelength of the specific Gaussian beam, D represents a diameter of the metasurface, w1 represents a beam waist diameter of the specific Gaussian beam, w2 represents a beam diameter of a beam having a substantially uniform intensity distribution, l represents a propagation distance, and ξ represents a radial distance from an origin of the metasurface.

[Math 2] $φ \left(r\right) = \frac{2 π}{λl} {\int }_{0}^{r} \left[\frac{{w}_{2}}{2}{\left[\frac{1 - exp \left(-8{ξ}^{2}/{w}_{1}^{2}\right)}{1 - exp \left(-2{D}^{2}/{w}_{1}^{2}\right)}\right]}^{1 / 2}-ξ\right] dξ$

For convenience, among optical elements having pillars, an optical element according to the present embodiment is referred to as a "meta-lens", and optical elements other than the optical element according to the present embodiment are referred to as "metasurfaces".

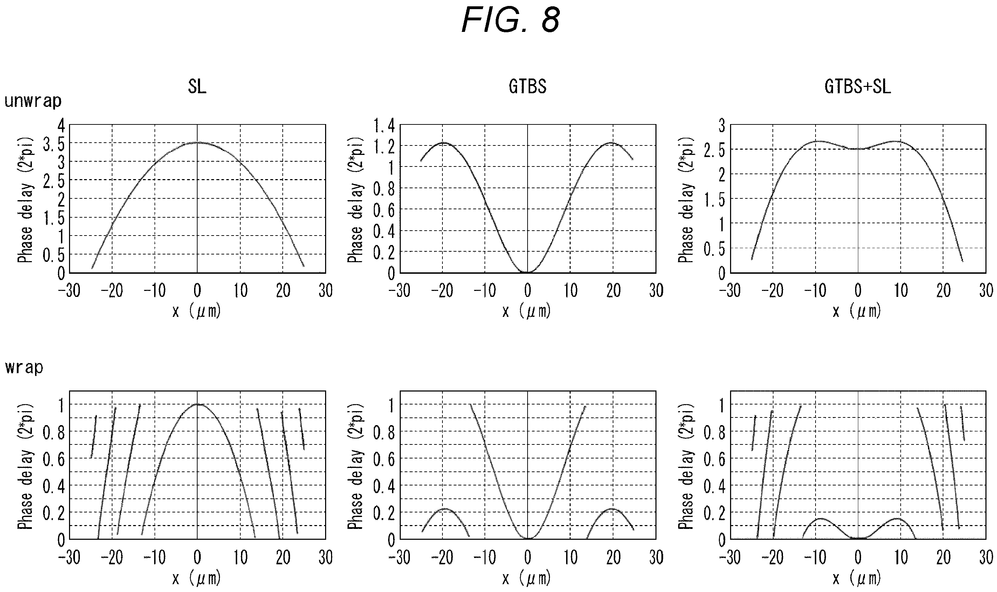

By adding the first phase distribution and the second phase distribution, a phase distribution that satisfies the above-described conditions 1 to 3 is obtained. Fig. 8 illustrates an example of (1) a phase distribution of a spherical lens (SL) for collimated light, (2) a phase distribution of a Gaussian-to-top-hat conversion metasurface (GTBS), and (3) a phase distribution obtained by adding these phase distributions together (GTBS+SL), when a numerical aperture NA at a light source is 0.22 and a (top-hat-beam-side) divergence angle θ is 5°.

In Fig. 8, each of the three diagrams in an upper row illustrates a continuous phase distribution (unwrapped phase distribution), and each of the three diagrams in a lower row illustrates a phase distribution folded within a range of 0 to 2π (wrapped phase distribution). Of the diagrams in Fig. 8, the two diagrams on the left side of the page illustrate the unwrapped phase distribution and the wrapped phase distribution of SL, the two diagrams in the center illustrate the unwrapped phase distribution and the wrapped phase distribution of GTBS, and the two diagrams on the right side illustrate the unwrapped phase distribution and the wrapped phase distribution of GTBS+SL (that is, for the present embodiment). In the phase distribution of GTBS+SL, a curve that satisfies the above-described three conditions is present in the central portion.

Unless otherwise specified, the phase distribution diagrams in the present embodiment illustrate phase delay as a positive value.

In manufacturing the meta-lens according to the present embodiment, a plurality of pillars having light transmissivity are then arranged on one major surface of the substrate. The positions of the pillars correspond to the unit sections of the substrate described above. The size of a pillar to be arranged in each unit section can be determined based on the phase distribution of GTBS+SL. For example, in a case where the pillars have a square-prism shape and the height of the pillars is constant, a pillar having a cross-sectional area corresponding to a phase amount at that position is arranged in each unit section. In this case, the cross-sectional area of the pillar arranged in each unit section is determined based on a correlation relationship between the cross-sectional area of the pillar and a phase shift amount.

Such a correlation relationship can be obtained, for example, for a cross-sectional area of a pillar, by using pillars having a single shape (for example, all being square prisms), scanning the height of the pillar and the cross-sectional area of the pillar with respect to transmittance, and also scanning the height of the pillar and the cross-sectional area of the pillar with respect to a phase shift amount. Based on the results, a correlation relationship between the phase shift amount and the cross-sectional area of the pillar, when the height is constant, is obtained. Such a correlation relationship can also be obtained, in the same manner as for the cross-sectional area of the pillar, for information regarding the pillar size other than the cross-sectional area, such as a pillar height, a pillar width, or a pillar area occupancy ratio.

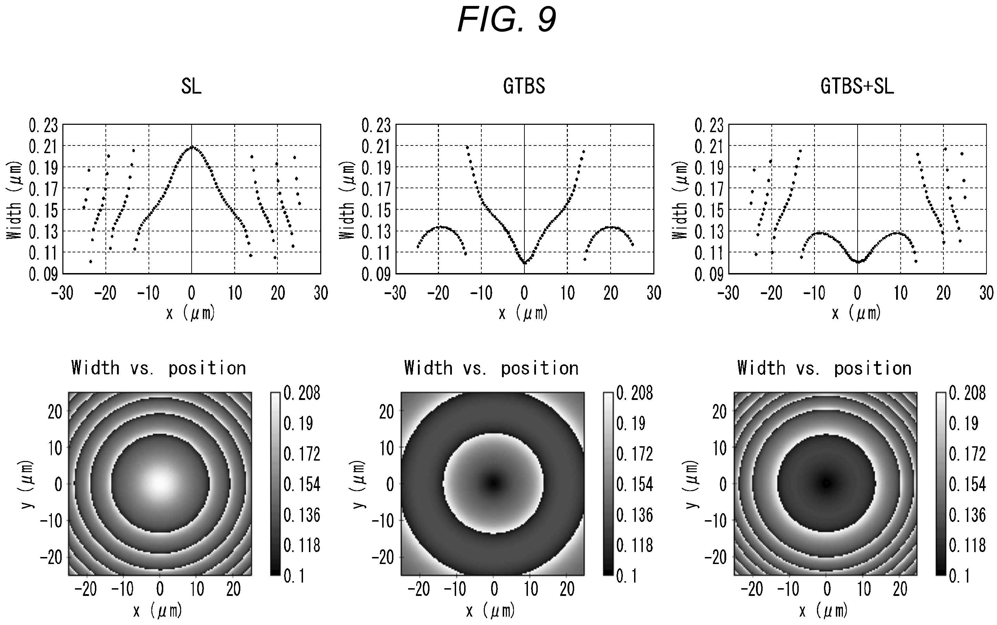

Fig. 9 is a diagram illustrating an example of a relationship between a distance from an optical center of a meta-lens and a "width" of a pillar, when square-prism pillars having the same height are arranged in accordance with (1) the wrapped phase distribution of SL, (2) the wrapped phase distribution of GTBS, and (3) the wrapped phase distribution of GTBS+SL in Fig. 8. In Fig. 9, the diagrams in an upper row illustrate the distance from a center of the substrate and the width of the square-prism pillar positioned at that position, in which a greater value indicates a larger pillar width. The diagram in a lower row illustrates the width of the pillars and a distribution thereof when the meta-lens is viewed in plan, in which a darker color indicates a smaller width of the pillar at that position and a lighter color indicates a larger width of the pillar at that position.

A distribution of the widths of the pillars in a central portion of an SL metasurface, in which pillars are arranged based on the phase distribution of SL, is convex upward in the same manner as the phase distribution, whereas a distribution of the widths of the pillars in a central portion of a GTBS metasurface, in which pillars are arranged based on the phase distribution of GTBS, is convex downward in the same manner as the phase distribution. In contrast, a distribution of the widths of the pillars in a central portion of the meta-lens of the present embodiment in which pillars are arranged based on the phase distribution of GTBS+SL forms a curve that satisfies the above-described three conditions, in the same manner as the phase distribution. In this manner, the distribution of the widths of the pillars in GTBS+SL is characteristic as compared with those in the SL metasurface and the GTBS metasurface.

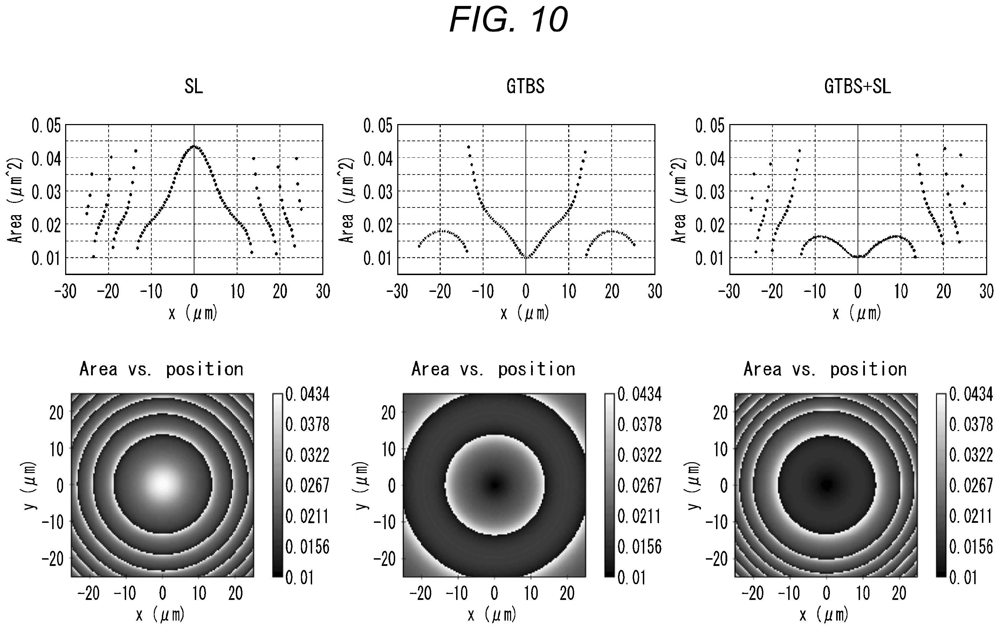

Fig. 10 is a diagram illustrating an example of a relationship between a distance from an optical center of a meta-lens and a "cross-sectional area" of a pillar, when square-prism pillars having the same height are arranged in accordance with the wrapped phase distributions of (1) to (3) in Fig. 8. In the diagrams in an upper row, a greater value indicates a larger cross-sectional area of the pillar. The diagram in a lower row illustrates the cross-sectional area of the pillars and a distribution thereof when the meta-lens is viewed in plan, in which a darker color indicates a smaller cross-sectional area of the pillar at that position and a lighter color indicates a larger cross-sectional area of the pillar at that position.

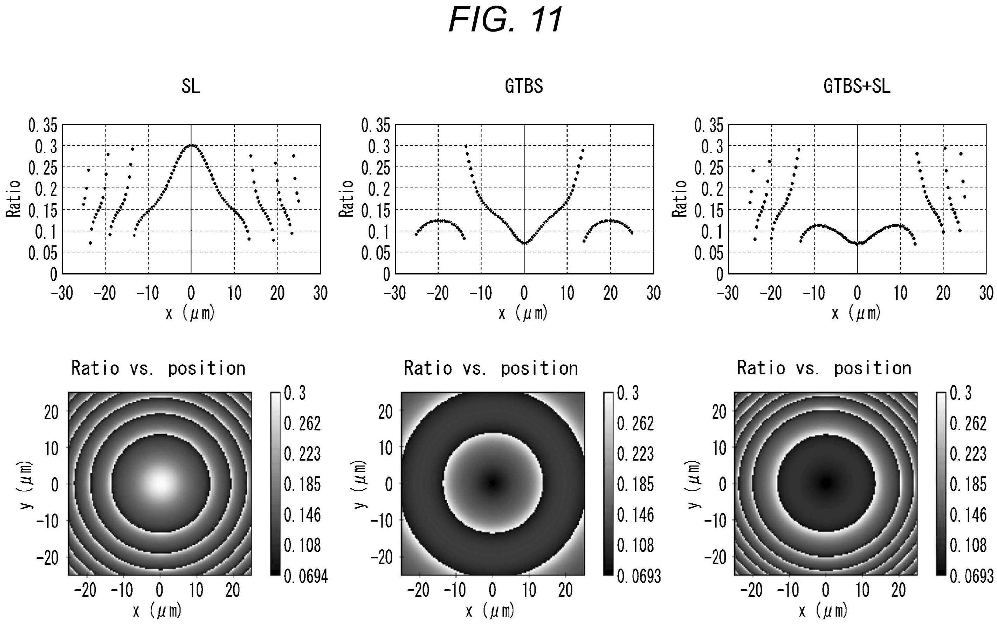

Fig. 11 is a diagram illustrating an example of a relationship between a distance from an optical center of a meta-lens and an "area occupancy ratio" of a pillar, when square-prism pillars having the same height are arranged in accordance with the wrapped phase distributions of (1) to (3) in Fig. 8. The diagrams in an upper row, a greater value indicates a larger area occupancy ratio of the pillar. The diagram in a lower row illustrates the area occupancy ratio of the pillars and a distribution thereof when the meta-lens is viewed in plan, in which a darker color indicates a smaller area occupancy ratio of the pillar at that position and a lighter color indicates a larger area occupancy ratio of the pillar at that position.

Also in Fig. 10 and Fig. 11, that is, for the cross-sectional area of the pillars and the area occupancy ratio of the pillars, respectively, tendencies similar to those in Fig. 9, that is, for the width of the pillars, are confirmed.

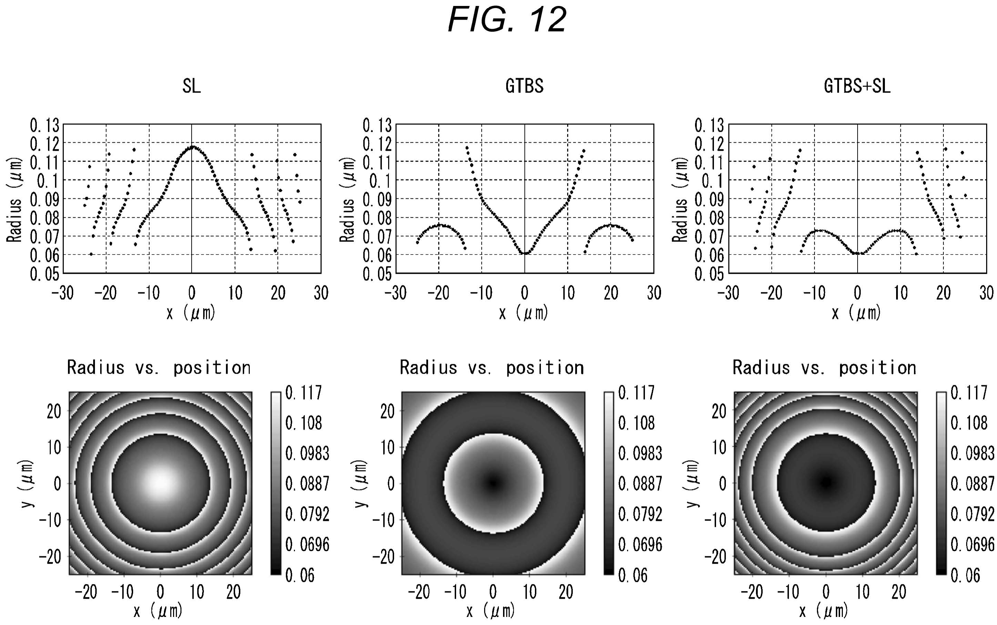

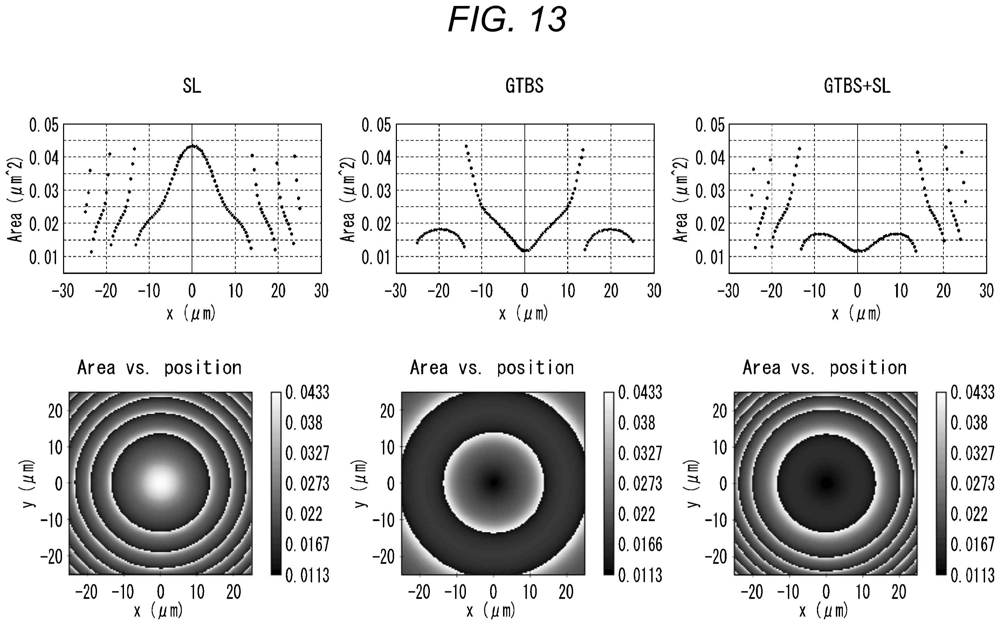

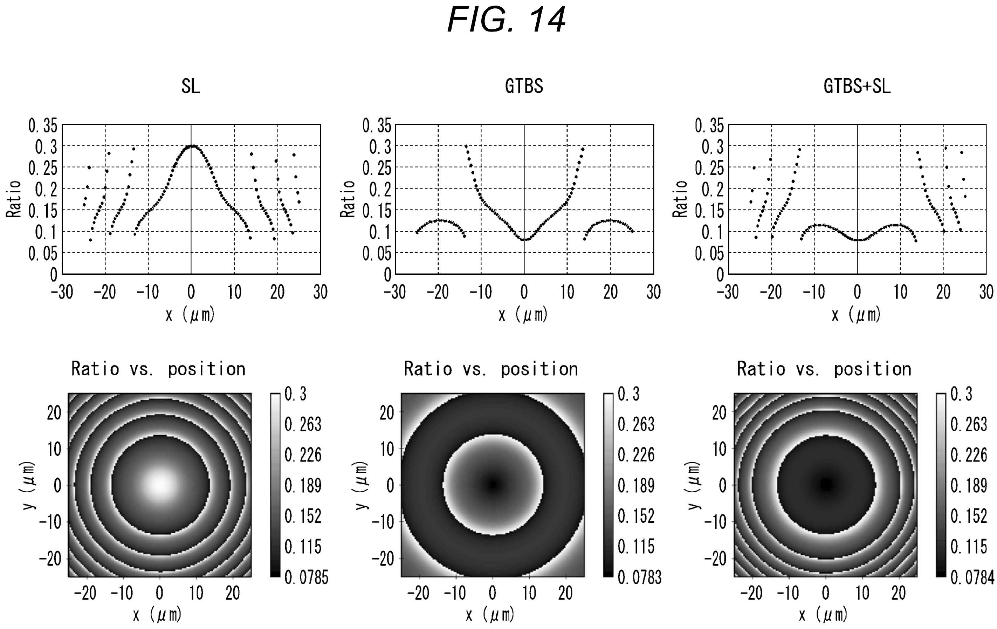

Similarly, cases of cylindrical pillars are illustrated in Figs. 12 to 14. Fig. 12 is a diagram illustrating an example of a relationship between a distance from an optical center of a meta-lens and a radius of a pillar, when cylindrical pillars having the same height are arranged in accordance with the wrapped phase distributions of (1) to (3) in Fig. 8. Fig. 13 illustrates an example of a relationship between a distance from an optical center of a meta-lens and a cross-sectional area of a pillar, when cylindrical pillars having the same height are arranged in accordance with the wrapped phase distributions of (1) to (3) in Fig. 8, and Fig. 14 illustrates an example of a relationship between a distance from an optical center of a meta-lens and an area occupancy ratio of a pillar, when cylindrical pillars having the same height are arranged in accordance with the wrapped phase distributions of (1) to (3) in Fig. 8. As illustrated in Figs. 12 to 14, tendencies similar to those of the square-prism pillars illustrated in Figs. 9 to 11 are also confirmed for the cylindrical pillars.

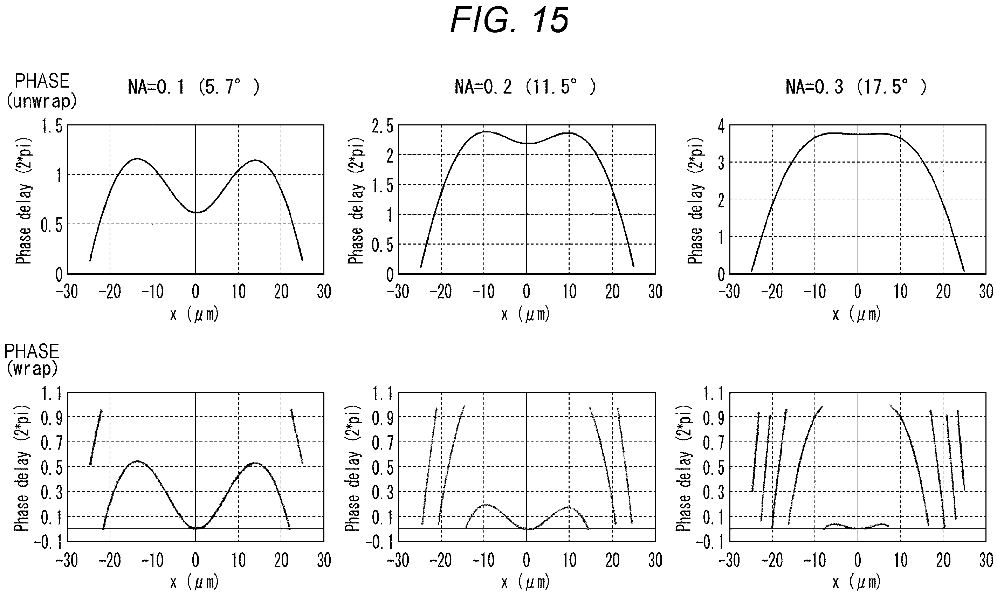

Here, a beam shape before being incident on the meta-lens will be examined. Fig. 15 is a diagram illustrating an example of an unwrapped phase distribution and a wrapped phase distribution of GTBS+SL when NA is 0.1, 0.2, or 0.3 and θ is 5°. In Fig. 15, the three diagrams in an upper row illustrate the unwrapped phase distributions, and the three diagrams in a lower row illustrate the wrapped phase distributions. Of the diagrams in Fig. 15, the two diagrams on the left side of the page illustrate the phase distribution in a case where NA is 0.1 (α is 5.7°), the two diagrams in the center illustrate the phase distribution in a case where NA is 0.2 (α is 11.5°), and the two diagrams on the right side illustrate the phase distribution in a case where NA is 0.3 (α is 17.5°).

From Fig. 15, a tendency is confirmed in which phase values increase as NA increases, and a difference between a maximum value and a minimum value in the central portion decreases. In addition, according to Fig. 15, it is considered that, when a divergence angle α of incident light becomes larger than a top-hat beam divergence angle θ, a degree of curvature at an inflection point of the phase distribution becomes smaller, and a shape of the phase distribution approaches that of SL more closely.

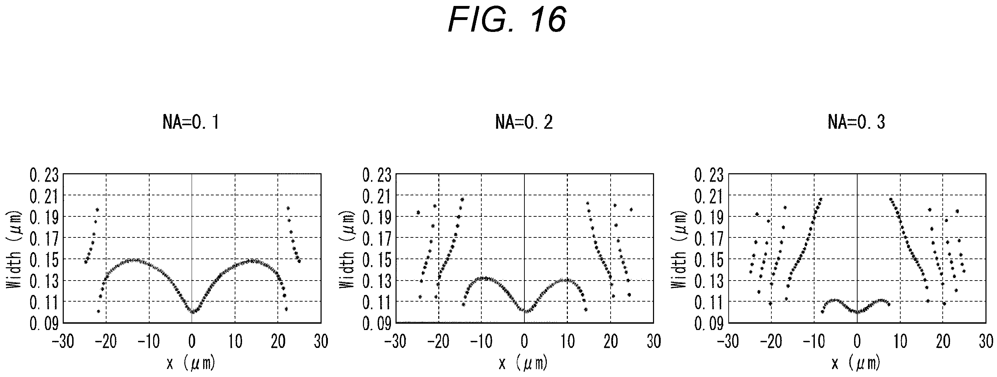

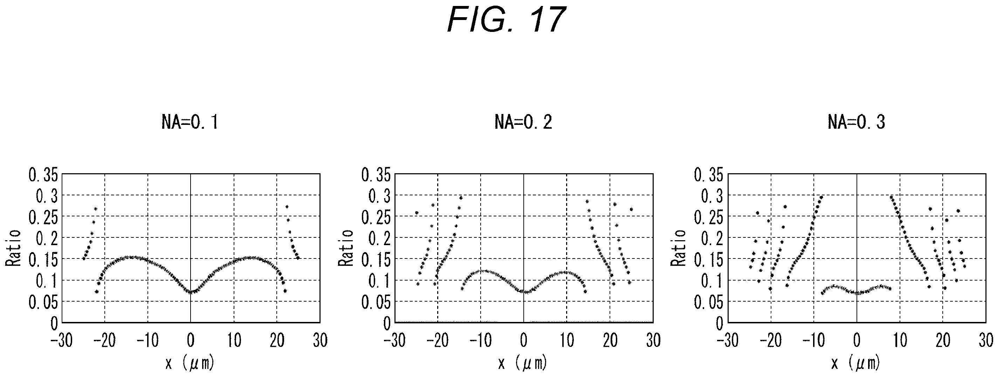

Fig. 16 illustrates an example of a relationship between a distance from an optical center and a width of a pillar, when square-prism pillars having the same height are arranged in accordance with the wrapped phase distribution in Fig. 15. In addition, Fig. 17 illustrates an example of a relationship between a distance from an optical center and an area occupancy ratio of a pillar, when square-prism pillars having the same height are arranged in accordance with the wrapped phase distribution in Fig. 15. Both Figs. 16 and 17 illustrate, in order from the left, the width of the pillars or the area occupancy ratio of the pillars, and distributions thereof, when NA is 0.1, 0.2, and 0.3, respectively.

According to Figs. 16 and 17, curves indicating changes in information regarding the pillar size with respect to the distance from the optical center satisfy the above-described three conditions. When NA (α) increases relative to θ, a tendency is observed in which a maximum value of the curve decreases, and a length of the curve along a direction of the major surface of the substrate becomes shorter (shrinks toward the optical center). In contrast, when NA (α) decreases relative to θ, a tendency is observed in which a maximum value of the curve increases, a length of the curve along a direction of the major surface of the substrate becomes longer, and a position of the maximum value along the direction of the major surface of the substrate is located farther from the optical center.

As illustrated in Figs. 15 to 17, the meta-lens of the present embodiment can be configured by arranging pillars based on the phase distribution illustrated in Fig. 15. As described above, the meta-lens of the present embodiment can be configured by arranging the pillars in the manner described above even when a beam shape of incident light is taken into consideration.

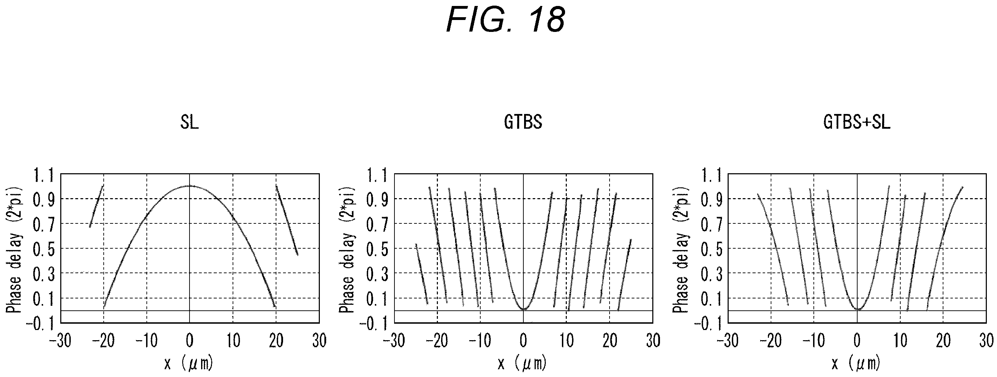

Next, a beam shape emitted from the meta-lens will be examined. Fig. 18 illustrates an example of wrapped phase distributions of SL, GTBS, and GTBS+SL when NA is 0.1 and θ is 15°. In Fig. 18, the wrapped phase distributions of SL, GTBS, and GTBS+SL are illustrated in order from the left. According to Fig. 18, it is considered that, when a top-hat beam divergence angle θ becomes larger than a divergence angle α of incident light, an inflection point of the phase distribution moves farther from the optical center and a change in phase values becomes larger, and a shape of the phase distribution approaches that of GTBS more closely.

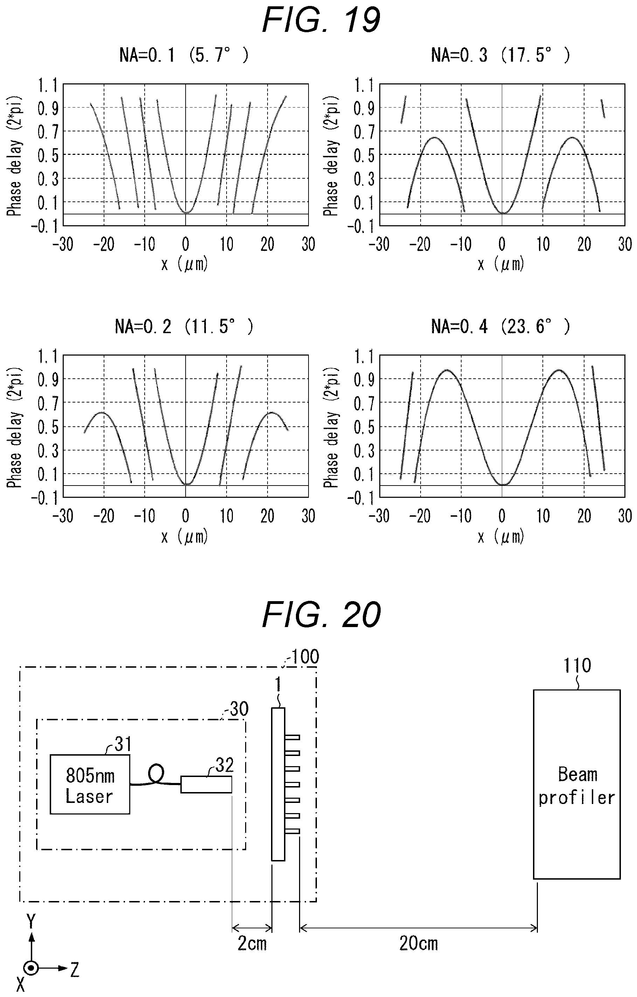

Fig. 19 illustrates an example of a wrapped phase distribution of GTBS+SL when NA is 0.1, 0.2, 0.3, or 0.4 and θ is 15°. Fig. 19 illustrates the wrapped phase distributions of GTBS+SL, in which an upper left diagram is for a case where NA is 0.1, an upper left diagram is for a case where NA is 0.2, an upper right diagram is for a case where NA is 0.3, and a lower right diagram is for a case where NA is 0.4. According to Fig. 19, it is confirmed that, when NA (α) also increases as the top-hat beam divergence angle θ increases, the phase distribution approaches the phase distribution of GTBS+SL from the phase distribution of GTBS, and a tendency is observed in which the above-described inflection point characteristic of the phase distribution of GTBS+SL is shifted toward the central portion.

According to Figs. 15 to 19, in the present embodiment in which desired optical characteristics are realized by pillars that differ only in cross-sectional area and are arranged at fixed positions on the substrate, it is considered preferable, from a viewpoint of realizing the above-described function (curve) satisfying the three conditions in the central portion of the meta-lens, that a ratio (α/θ) of α to θ is from 0 to 0.6 in a case where θ is 5° to 30° and NA is 0.1 to 0.4. Depending on an application of the meta-lens, the beam shapes of incident light and emitted light may be limited. In such a case, by performing the above-described manufacturing process within a range that satisfies conditions of the beam shape, a meta-lens according to the present embodiment adapted to the application can be manufactured.

According to the manufacturing method of the present embodiment, although a meta-lens that does not satisfy at least one of the above-described three conditions relating to the pillars of the meta-lens of the present embodiment may be manufactured, a meta-lens capable of substantially converting a beam profile of a Gaussian beam into a top-hat shape can be easily designed and manufactured. Thus, a meta-lens capable of substantially converting the beam profile of a Gaussian beam into a top-hat shape can also be said to be a meta-lens manufactured by the above-described manufacturing method of the present embodiment.

The meta-lens according to the manufacturing method of the present embodiment is capable of substantially converting a beam profile of a Gaussian beam into a top-hat shape by the above-described simplified design; however, there are circumstances in which it is impossible or impractical to directly specify the meta-lens by its structure or characteristics. Such a meta-lens is represented, as a prominent characteristic resulting from the simplified design, by a characteristic change in the shape of the pillars in the central portion. On the other hand, considering that lenses are generally designed in accordance with an incident beam, it is considered apparent that the above-described conversion function may also be realized by structures other than those having the above-described prominent characteristic. However, it is impossible to uniformly specify, in words, what kind of state of structures other than the above-described prominent characteristic would bring about the above-described conversion function. Specifying structures that bring about the conversion function beyond the above-described prominent characteristic may be possible by performing comparative examinations of pillar arrangements and conditions of target beams under numerous and diverse states. However, such examination work would require an enormous amount of time and cost, and, in view of the nature of patent applications, which require rapidity, such work is hardly practical.

### [Illumination Device]

An illumination device according to one embodiment of the present invention includes a light source that emits a Gaussian beam, and the meta-lens of the present embodiment arranged on an optical path of emitted light from the light source. An aspect of the illumination device is illustrated in Fig. 20.

As illustrated in Fig. 20, an illumination device 100 includes a laser 31, an optical fiber 32, and the meta-lens 1. The laser 31 generates laser light having, for example, a wavelength of 805 nm. The optical fiber 32 is optically connected to the laser 31, transmits the laser light generated by the laser, and emits the laser light from a distal end thereof. From the distal end of the optical fiber 32, laser light that is a Gaussian beam is emitted. The laser 31 and the optical fiber 32 constitute a light source 30 of the illumination device 100.

The meta-lens 1 is the meta-lens according to the present embodiment described above. The meta-lens 1 is arranged on an optical path of emitted light from the optical fiber 32, at a position separated from the distal end of the optical fiber 32, with the major surface having pillars oriented forward. Further, the distal end portion of the optical fiber 32 and the meta-lens 1 may be held by a probe. Such a configuration is preferable from a viewpoint of configuring an illumination device applied to an endoscope.

The illumination device of the present embodiment, by including a light source of a Gaussian beam and the above-described meta-lens of the present embodiment, is capable of emitting light having a substantially top-hat beam profile.

The illumination device according to the embodiment of the present invention may be configured such that the meta-lens directly receives laser light from the laser without using an optical fiber. A configuration as illustrated in Fig. 20, which optically includes only a laser, an optical fiber, and a meta-lens, or a simpler configuration including only a laser and a meta-lens, is preferable from a viewpoint of downsizing the illumination device.

Alternatively, the illumination device according to the embodiment of the present invention may further include an additional optical configuration such as an optical element arranged in an optical system of the light source for adjusting a divergence angle α of the laser. A configuration including such an additional optical component is preferable from a viewpoint of improving performance of the illumination device.

Note that, from a viewpoint that a high output and a wide applicable range resulting therefrom can be expected, the light source preferably includes a laser, but may include components other than a laser as long as a Gaussian beam can be generated. For example, the light source may include a light-emitting diode as a beam generation source.

### [Summary]

A first aspect of the present invention is a meta-lens (1) including a substrate (2) having light transmissivity and a plurality of nano-sized pillars (3) having light transmissivity arranged on one major surface of the substrate, in which, when an optical center of the meta-lens is set as an origin, an area S of each of the pillars positioned at points having a distance r from the optical center is represented by a function S(r) that satisfies the following three conditions.
(1) The function is continuous in a range of -r0 ≤ r ≤ r0 (r0 > 0),
(2) The function takes a minimum value at r = 0,
(3) The function takes a maximum value at r = ±r1 (0 < r1 < r0).

A second aspect of the present invention is a meta-lens including a substrate having light transmissivity and a plurality of nano-sized pillars having light transmissivity arranged on one major surface of the substrate, in which, when an optical center of the meta-lens is set as an origin, an area occupancy ratio Σ of the pillars positioned at points having a distance r from the optical center is represented by a function Σ(r) that satisfies the following three conditions.
(1) The function is continuous in a range of -r0 ≤ r ≤ +r0 (r0 > 0),
(2) The function takes a minimum value at r = 0,
(3) The function takes a maximum value at r = ±r1 (0 < r1 < r0).

According to the first aspect or the second aspect of the present invention, a meta-lens having pillars on one major surface of a substrate is capable of substantially converting a Gaussian beam into a top-hat shape. Accordingly, according to the first aspect or the second aspect, a meta-lens capable of converting a beam profile from a Gaussian distribution to a top-hat distribution by a nanostructure on only one major surface of the substrate is provided.

In a third aspect of the present invention, according to the first aspect or the second aspect, the pillars are respectively arranged in unit sections regularly set on the major surface, the pillars have the same shape and the same height, and the pillars have different cross-sectional areas depending on positions of the unit sections from the optical center. According to the third aspect, a pillar that provides a desired phase can be easily determined by adjusting any one of the shape, the height, or the cross-sectional area of the pillar. Accordingly, the third aspect is more effective from a viewpoint of ease of design of the meta-lens.

A fourth aspect of the present invention is an illumination device including a light source that emits a Gaussian beam and the above-described meta-lens arranged on an optical path of emitted light from the light source. In the fourth aspect, the above-described meta-lens is arranged on the optical path of the Gaussian beam from the light source. Accordingly, according to the fourth aspect, it is possible to realize a small-sized illumination device in which a beam profile is substantially converted from a Gaussian distribution to a top-hat distribution by a meta-lens having a simple configuration on only one major surface of a substrate.

In a fifth aspect of the present invention, according to the fourth aspect, the light source includes a laser. The fifth aspect is more effective from a viewpoint of a high energy intensity of irradiation light and from a viewpoint of improving versatility of the illumination device.

A sixth aspect of the present invention is a manufacturing method of a meta-lens, the manufacturing method including arranging pillars having light transmissivity on one major surface of a substrate having light transmissivity such that a phase distribution of light transmitted through the meta-lens becomes a phase distribution obtained by adding a first phase distribution of a lens that converts a specific Gaussian beam into collimated light and a second phase distribution of a metasurface that converts the specific Gaussian beam into a top-hat shape. According to the sixth aspect, by a simple operation of adding the first phase distribution and the second phase distribution, both of which are calculable, it is possible to design and manufacture a meta-lens having pillars on one major surface of a substrate and capable of substantially converting a beam profile of a Gaussian beam into a top-hat shape. Accordingly, according to the sixth aspect, it is possible to provide a meta-lens capable of converting a beam profile from a Gaussian distribution to a top-hat distribution by a nanostructure on only one major surface of the substrate.

In a seventh aspect of the present invention, according to the sixth aspect, the first phase distribution is represented by Expression (1) below. In Expression (1), x represents a distance from an optical axis on an x-axis orthogonal to an optical axis of a spherical lens, y represents a distance from the optical axis on a y-axis orthogonal to both the optical axis and the x-axis, and f represents a focal length of the spherical lens. The seventh aspect is more effective from a viewpoint of easily determining an arrangement of pillars of a meta-lens capable of substantially converting a beam profile of a Gaussian beam into a top-hat shape.

[Math 3] $ϕ \left(x, y\right) = 2 π / λ \left(\sqrt{\left({x}^{2}+{y}^{2}+{f}^{2}\right)}-f\right)$

In an eighth aspect of the present invention, according to the sixth aspect or the seventh aspect, the second phase distribution is represented by Expression (2) below. In Expression (2), r represents a distance from an optical axis of the metasurface, λ represents a wavelength of a specific Gaussian beam having a radiant intensity distribution of a Gaussian distribution, D represents a diameter of the metasurface, w1 represents a beam waist diameter of the specific Gaussian beam having the radiant intensity distribution of the Gaussian distribution, w2 represents a beam diameter at which a radiant intensity distribution of light having a radiant intensity distribution of a Gaussian distribution of a beam having a substantially uniform intensity distribution becomes uniform, l represents a propagation distance, and ξ represents a radial distance from an origin of the metasurface. The eighth aspect is more effective from a viewpoint of easily determining an arrangement of pillars of a meta-lens capable of substantially converting a beam profile of a Gaussian beam into a top-hat shape.

[Math 4] $φ \left(r\right) = \frac{2 π}{λl} {\int }_{0}^{r} \left[\frac{{w}_{2}}{2}{\left[\frac{1 - exp \left(-8{ξ}^{2}/{w}_{1}^{2}\right)}{1 - exp \left(-2{D}^{2}/{w}_{1}^{2}\right)}\right]}^{1 / 2}-ξ\right] dξ$

In a ninth aspect of the present invention, according to any one of the sixth to eighth aspects, information regarding a size of a pillar is determined based on a correlation relationship between information regarding a size of a pillar and a phase shift amount when a shape of the pillar and an arrangement of the pillar on the major surface are specified, and a pillar having the size of the determined information is arranged on the major surface. The ninth aspect is more effective from a viewpoint of easily determining an arrangement of pillars of a meta-lens capable of substantially converting a beam profile of a Gaussian beam into a top-hat shape.

According to the present invention, a meta-lens capable of substantially converting a Gaussian beam into a top-hat-type beam can be easily designed and realized. The present invention, which exhibits such effects, is expected to contribute to the promotion of industries utilizing meta-lenses or to the expansion of technological innovation, and is expected, for example, to contribute to the achievement of Goal 9, "Build resilient infrastructure, promote inclusive and sustainable industrialization and foster innovation", of the Sustainable Development Goals (SDGs) advocated by the United Nations.

The present invention is not limited to the above-described embodiments, and thus various modifications can be made within the scope of the claims. Embodiments obtained by appropriately combining technical means disclosed in different embodiments are also included within the technical scope of the present invention. Hereinafter, specific examples of embodiments of the present invention will be described.

### Examples

### [First Example]

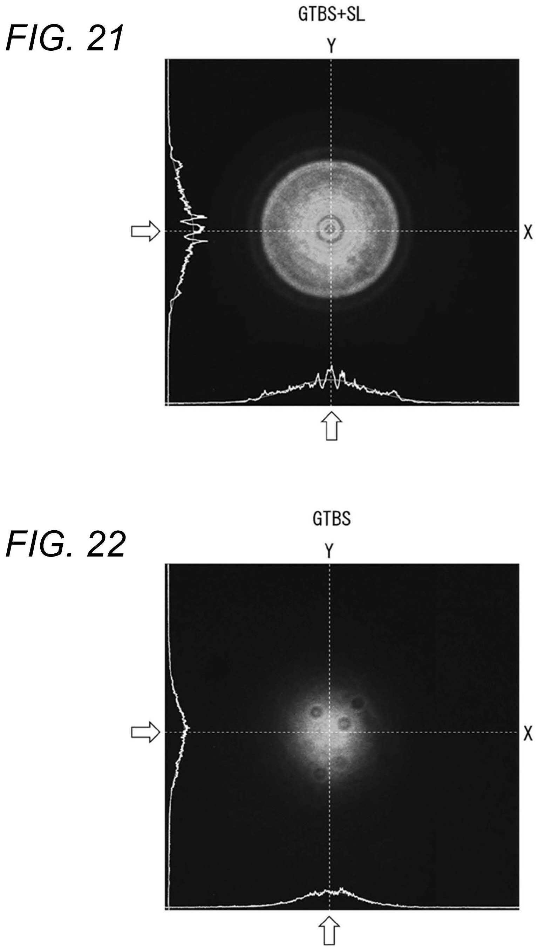

The meta-lens 1 according to the present embodiment was manufactured using the method described in the present embodiment, and the illumination device as illustrated in Fig. 20 was constructed. Then, an intensity distribution of a beam was measured using a beam profiler 110. An 805-nm fiber-coupled laser was used as the light source 30. An optical path length of incident light to the meta-lens (a distance from the distal end of the optical fiber 32 to the other major surface of the substrate of the meta-lens 1) was set to 2 cm, and a transmission distance D2 was set to 20 cm. A diameter of the meta-lens 1 was 5 mm, the incident light on the meta-lens 1 was a Gaussian beam, and a numerical aperture NA of the optical fiber 32 was 0.1. The meta-lens 1 was arranged along an X-Y plane perpendicular to an optical axis in a case where a direction along the optical axis at the distal end portion of the optical fiber 32 was defined as a Z direction. The intensity distribution of emitted light from the meta-lens 1 at a propagation distance of 20 cm, measured by the beam profiler 110, is illustrated in Fig. 21.

As illustrated in Fig. 21, an intensity distribution including portions of high radiant intensity not only at an optical center but also on both sides thereof is confirmed for the meta-lens 1. Thus, for the meta-lens 1, a top-hat-type beam profile having a relatively uniform intensity distribution is confirmed.

### [First Comparative Example]

Except that a GTBS metasurface was used instead of the meta-lens 1, an intensity distribution of a beam was measured in the same manner as in the first example. The GTBS metasurface is configured by arranging pillars having different cross-sectional areas based on the phase distribution obtained from the above-described Expression (2), using a method similar to that of the present embodiment. An intensity distribution of emitted light from the GTBS metasurface at a propagation distance of 20 cm is illustrated in Fig. 22.

As illustrated in Fig. 22, a radiant intensity distribution of the GTBS metasurface is strong at the optical center and becomes weaker with increasing distance from the optical center. Thus, for the GTBS metasurface, a Gaussian-type beam profile in which radiant intensity decreases as the distance from the optical center increases is confirmed.

### [Second Example]

According to the method described in the embodiments of the present invention, a phase distribution of GTBS+SL was obtained under the following conditions, and a meta-lens was designed in which square prism pillars having different cross-sectional areas were arranged on one major surface of a substrate in accordance with the phase distribution. A designed beam diameter of a uniform irradiation area at a propagation distance of 100 µm was 39.4 µmΦ.
NA = 0.22
α = 12.7°
θ = 5°

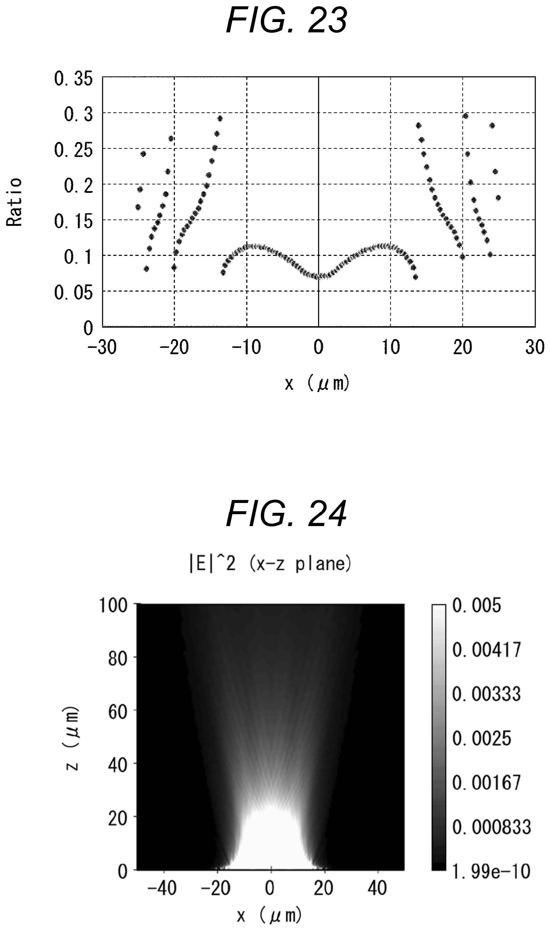

Fig. 23 illustrates a relationship between an area occupancy ratio of pillars of the meta-lens of the present example and a distance of the pillars from the optical center.

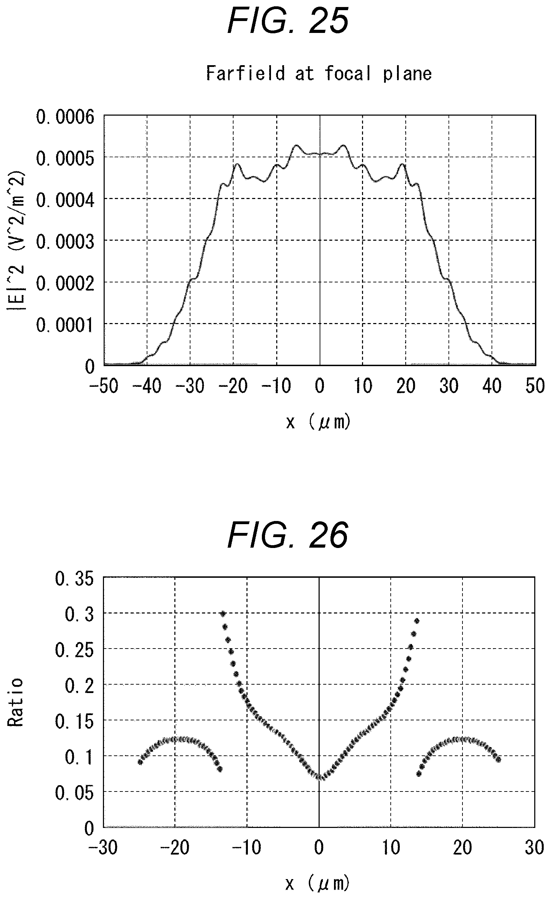

Fig. 24 illustrates a calculation result of a beam intensity distribution in an x-z plane of the meta-lens when a Gaussian beam having the above-described α is incident on the meta-lens of the present example along a Z direction, which is an optical-axis direction. Fig. 25 illustrates a calculation result of a beam profile of emitted light from the meta-lens at a propagation distance of 100 µm.

As illustrated in Fig. 25, in a model of the meta-lens of the present example, a substantially top-hat-type beam profile is confirmed. In addition, in the model of the meta-lens of the present example, a result is obtained in which a substantially uniform beam intensity is achieved over a range equivalent to a designed beam diameter (39.4 µmΦ) of a uniform irradiation area.

### [Second Comparative Example]

According to a method for obtaining a phase distribution of GTBS from the above-described Expression (2), a phase distribution of GTBS was obtained under the same conditions as those of the second example, and a GTBS metasurface was designed in which square prism pillars having different cross-sectional areas were arranged on one major surface of a substrate in accordance with the phase distribution, in the same manner as in the second example. Fig. 26 illustrates a relationship between an area occupancy ratio of pillars of the GTBS metasurface of the present comparative example and a distance of the pillars from the optical center.

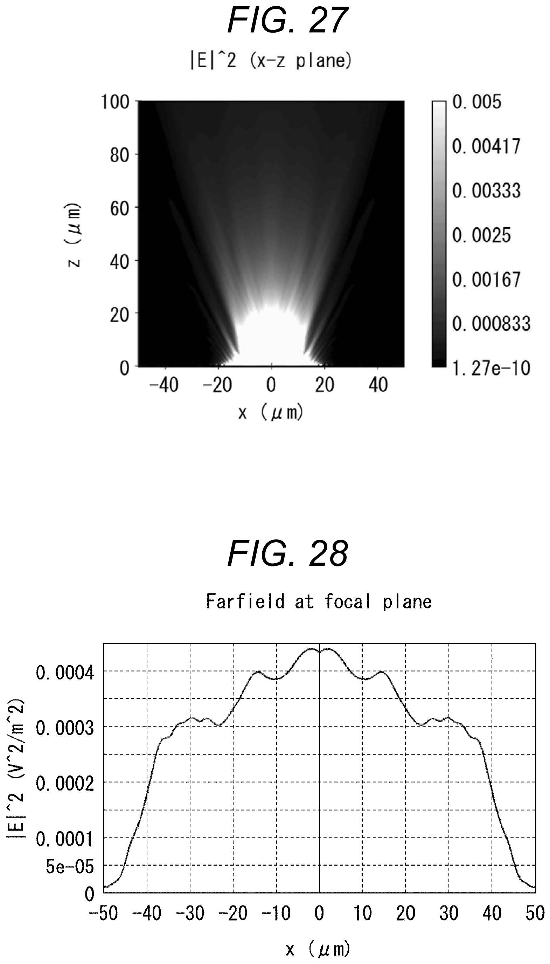

In addition, a beam profile was calculated for the model of the GTBS metasurface of the present comparative example in the same manner as in the second example. Fig. 27 illustrates a calculation result of a beam intensity distribution in an x-z plane of the GTBS metasurface. In addition, Fig. 28 illustrates a calculation result of a beam profile of emitted light from the GTBS metasurface at a propagation distance of 100 µm.

As illustrated in Fig. 28, in the model of the GTBS metasurface of the present comparative example, an illuminance distribution within an illumination area is poor, and a bright portion is generated at the center. In addition, as is apparent from a comparison between Fig. 25 and Fig. 28, although a designed beam diameter of a uniform irradiation area is 39.4 µmΦ, which is the same as that of the second example, the illumination area spreads wider than a designed value, and the illuminance is reduced even at the same laser output as that of the second example.

### [Third Example]

As in the same manner as in the second example, according to the method described in the embodiments of the present invention, a phase distribution of GTBS+SL was obtained under the following conditions, and a meta-lens was designed in which square prism pillars having different cross-sectional areas were arranged on one major surface of a substrate in accordance with the phase distribution. A designed beam diameter of a uniform irradiation area at a propagation distance of 100 µm was 57.2 µmΦ.
NA = 0.4
α = 23.6°
θ = 10°

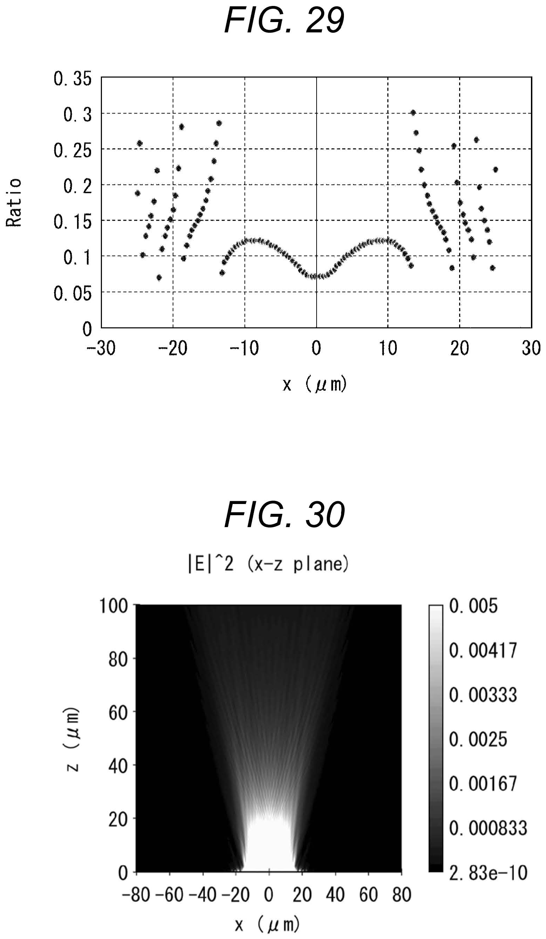

Fig. 29 illustrates a relationship between an area occupancy ratio of pillars of the meta-lens of the present example and a distance of the pillars from the optical center.

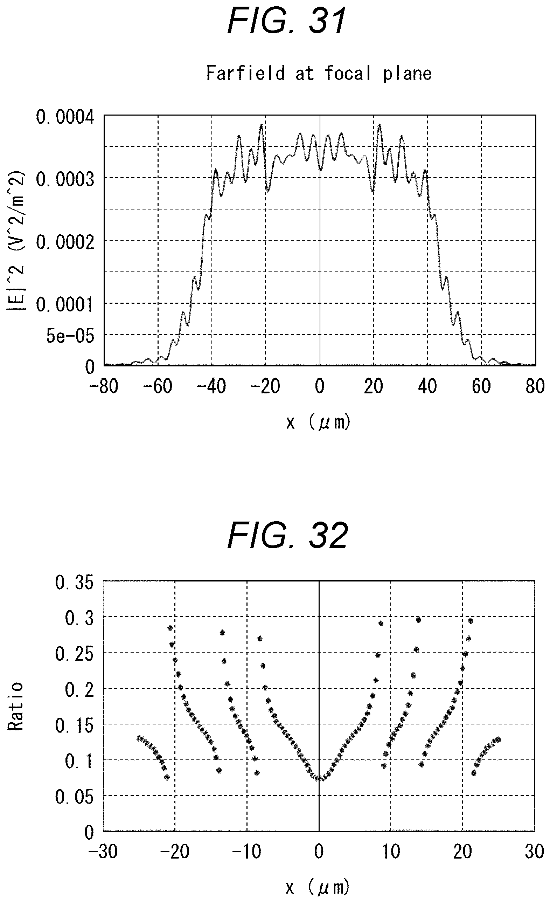

Fig. 30 illustrates a calculation result of a beam intensity distribution in an x-z plane of the meta-lens when a Gaussian beam having the above-described α is incident on the meta-lens of the present example along a Z direction, which is an optical-axis direction. Fig. 31 illustrates a calculation result of a beam profile of emitted light from the meta-lens at a propagation distance of 100 µm.

As illustrated in Fig. 31, in a model of the meta-lens of the present example, a substantially top-hat-type beam profile is confirmed, similarly to the second example. In addition, in the model of the meta-lens of the present example, similarly to the second example, a result is obtained in which a substantially uniform beam intensity is achieved over a range equivalent to a designed beam diameter (57.2 µmΦ) of a uniform irradiation area.

### [Third Comparative Example]

According to a method for obtaining a phase distribution of GTBS from the above-described Expression (2), a phase distribution of GTBS was obtained under the same conditions as those of the third example, and a GTBS metasurface was designed in which square prism pillars having different cross-sectional areas were arranged on one major surface of a substrate in accordance with the phase distribution, in the same manner as in the third example. Fig. 32 illustrates a relationship between an area occupancy ratio of pillars of the GTBS metasurface of the present comparative example and a distance of the pillars from the optical center.

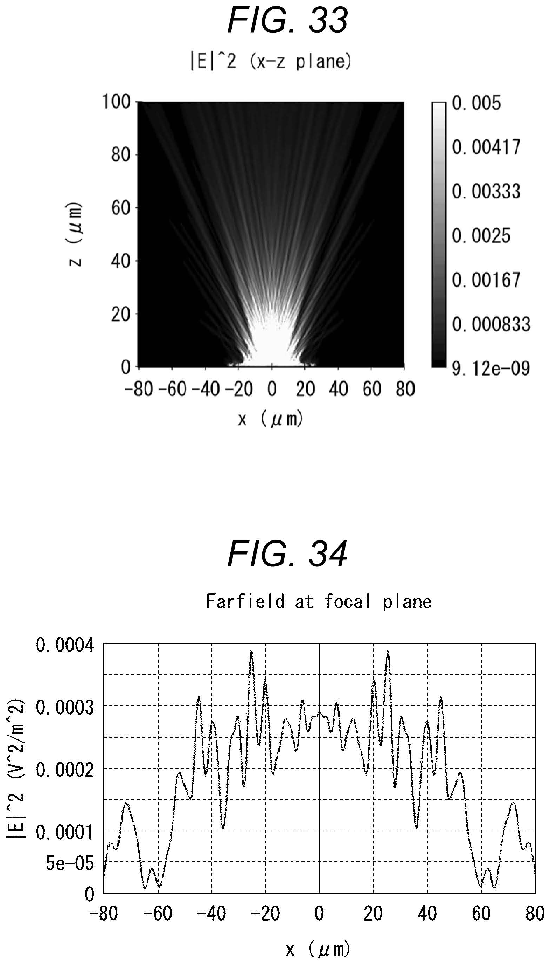

In addition, a beam profile was calculated for the model of the GTBS metasurface of the present comparative example in the same manner as in the third example. Fig. 33 illustrates a calculation result of a beam intensity distribution in an x-z plane of the GTBS metasurface. In addition, Fig. 34 illustrates a calculation result of a beam profile of emitted light from the GTBS metasurface at a propagation distance of 100 µm.

As illustrated in Fig. 34, in a model of the GTBS metasurface of the present comparative example, uniformity of the illuminance distribution within the illumination area is low. In addition, as is apparent from a comparison between Fig. 31 and Fig. 34, although a designed beam diameter of a uniform irradiation area is 57.2 µmΦ, which is the same as that of the third example, the illumination area spreads wider than a designed value, and the illuminance is reduced even at the same laser output as that of the third example.

### Reference Signs List

- 1: meta-lens
- 2: substrate
- 3: pillar
- 10: central portion
- 20: peripheral portion
- 21: first peripheral portion
- 22: second peripheral portion
- 23: third peripheral portion
- 2n: n-th peripheral portion
- 30: light source
- 31: laser
- 32: optical fiber
- 100: illumination device
- 110: beam profiler

## Claims

1. A meta-lens (1) comprising:
a substrate (2) having light transmissivity; and
a plurality of nano-sized pillars (3) having light transmissivity arranged on one major surface of the substrate (2),
wherein
when an optical center of the meta-lens (1) is set as an origin, an area S of each of the pillars positioned at points having a distance r from the optical center is represented by a function S(r) that satisfies three conditions:
(1) the function is continuous in a range of -r0 ≤ r ≤ r0 (r0 > 0),
(2) the function takes a minimum value at r = 0, and
(3) the function takes a maximum value at r = ±r1 (0 < r1 < r0).

2. A meta-lens (1) comprising:
a substrate (2) having light transmissivity; and
a plurality of nano-sized pillars (3) having light transmissivity arranged on one major surface of the substrate (2),
wherein
when an optical center of the meta-lens (1) is set as an origin, an area occupancy ratio Σ of the pillars positioned at points having a distance r from the optical center is represented by a function Σ(r) that satisfies three conditions:
(1) the function is continuous in a range of -r0 ≤ r ≤ +r0 (r0 > 0),
(2) the function takes a minimum value at r = 0, and
(3) the function takes a maximum value at r = ±r1 (0 < r1 < r0).

3. The meta-lens (1) according to claim 1 or 2, wherein
the pillars (3) are respectively arranged in unit sections regularly set on the major surface, and
the pillars (3) have the same shape and the same height, and have different cross-sectional areas depending on positions of the unit sections from the optical center.

4. An illumination device comprising:
a light source that emits a Gaussian beam; and
the meta-lens (1) according to claim 1 or 2 arranged on an optical path of emitted light from the light source.

5. The illumination device according to claim 4, wherein the light source includes a laser.

6. A manufacturing method of a meta-lens (1), the manufacturing method comprising:
arranging pillars (3) having light transmissivity on one major surface of a substrate (2) having light transmissivity such that a phase distribution of light transmitted through the meta-lens (1) becomes a phase distribution obtained by adding a first phase distribution of a lens that converts a specific Gaussian beam into collimated light and a second phase distribution of a metasurface that converts the specific Gaussian beam into a top-hat shape.

7. The manufacturing method of the meta-lens (1) according to claim 6, wherein
the first phase distribution is represented by Expression (1), where
[Math 1] $ϕ \left(x, y\right) = 2 π / λ \left(\sqrt{\left({x}^{2}+{y}^{2}+{f}^{2}\right)}-f\right)$
in Expression (1), x represents a distance from an optical axis on an x-axis orthogonal to the optical axis of the lens, y represents a distance from the optical axis on a y-axis orthogonal to both the optical axis and the x-axis, and f represents a focal length of the lens.

8. The manufacturing method of the meta-lens (1) according to claim 6, wherein
the second phase distribution is represented by Expression (2), where
[Math 2] $φ \left(r\right) = \frac{2 π}{λl} {\int }_{0}^{r} \left[\frac{{w}_{2}}{2}{\left[\frac{1 - exp \left(-8{ξ}^{2}/{w}_{1}^{2}\right)}{1 - exp \left(-2{D}^{2}/{w}_{1}^{2}\right)}\right]}^{1 / 2}-ξ\right] dξ$
in Expression (2), r represents a distance from an optical axis of the metasurface, λ represents a wavelength of the specific Gaussian beam, D represents a diameter of the metasurface, w1 represents a beam waist diameter of the specific Gaussian beam, w2 represents a diameter of a beam having a substantially uniform intensity distribution, l represents a propagation distance, and ξ represents a radial distance from an origin of the metasurface.

9. The manufacturing method of the meta-lens (1) according to claim 6, wherein information regarding a size of the pillar is determined based on a correlation relationship between information regarding a size of the pillar and a phase shift amount when a shape of the pillar and an arrangement of the pillar on the major surface are specified, and the pillar having the size of the determined information is arranged on the major surface.
